# EUROPEAN PATENT APPLICATION

(11) **EP 4 696 623 A1**
(43) Date of publication of application: **18.02.2026**
(21) Application number: 25190506.3
(22) Date of filing: 18.07.2025
(51) Int. Cl.: B65G 37/02, B65G 47/90, B65G 57/03, B65G 61/00

(54) **WORKPIECE LOADING APPARATUS**

(30) Priority: 14.08.2024 JP 2024135404
(71) Applicant: Aida Engineering Ltd., Sagamihara-shi Kanagawa 252-5181 (JP)
(72) Inventor: SHIRIYA, Shunichi, Kanagawa, 252-5181 (JP)
(74) Representative: Grosse, Felix Christopher

(57) **Abstract**

A workpiece loading apparatus 100 includes a pick-up stage 31, an A-side palletizing stage 41 and a B-side palletizing stage 141, an A-side lifting device 42, a B-side lifting device 142, and a workpiece transfer device 60. The workpiece transfer device 60 is configured to transfer a workpiece 4 picked up from the pick-up stage 31 to one of an A-side stocker 44 or a B-side stocker 144 until the stocker becomes full, and a corresponding one of the A-side lifting device 42 or the B-side lifting device 142 is configured to operate so that a height of the corresponding one of the A-side stocker 44 or the B-side stocker 144 is aligned with a workpiece horizontal movement height of the workpiece transfer device 60. When one of the A-side stocker 44 or the B-side stocker 144 becomes full, the workpiece transfer device 60 switches an operation to transfer of the workpiece 4 to another one of the stockers 44, 144.

## Description

The present invention relates to a workpiece loading apparatus (palletizing apparatus) configured to load materials, components (parts), products, or other members (workpieces) to a stocker (pallet) in a stacked manner.

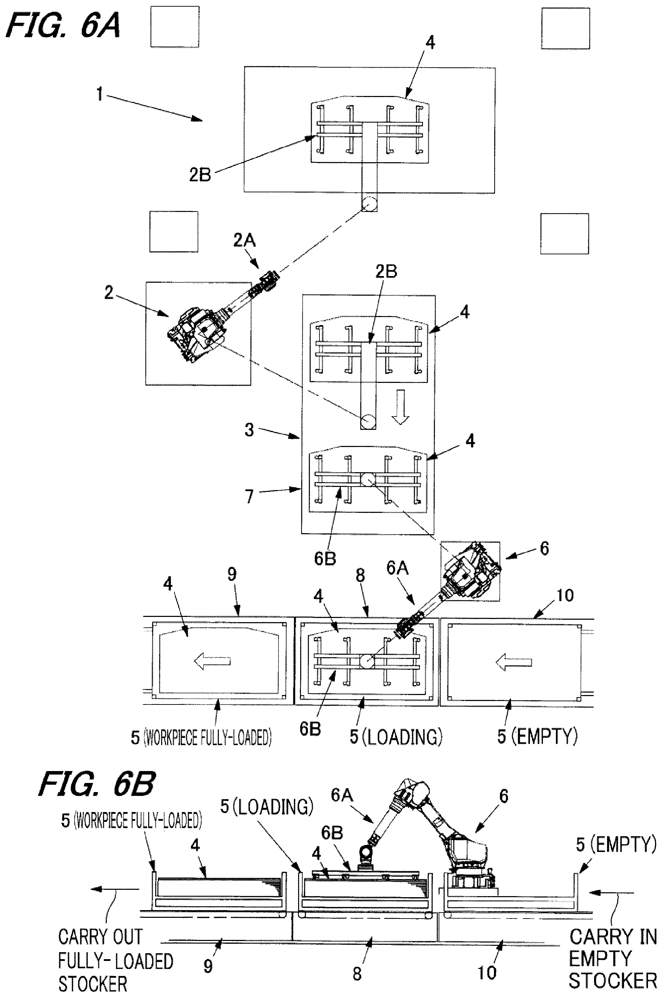

Hitherto, there has been known a workpiece loading apparatus (palletizing apparatus) using an articulated robot as illustrated in Fig. 6A and Fig. 6B as an apparatus configured to load (palletize) workpieces that come from an upstream step in a press working line, to a stocker in order in a stacked manner.

A loading (palletizing) operation of the related-art apparatus as described above is executed by, for example, a procedure of Items (1) to (7) described below.
(1) A workpiece 4 processed and punched out in a pressing machine 1 is transferred to a transportation conveyor 3 via a workpiece holding unit (attraction(suction) holding means or the like) 2B mounted to a distal end of an arm 2A of a carrying-out robot 2.
(2) The workpiece 4 on the transportation conveyor 3 is sent to a pick-up stage 7.
(3) A transfer robot 6 that is an articulated robot picks up the workpiece 4 from the pick-up stage 7 and loads the workpiece 4 to a stocker 5 at a palletizing stage 8 via a workpiece holding unit 6B mounted to a distal end of an arm 6A.
(4) Items (1) to (3) are repeated so that the workpieces 4 are stacked in order to the stocker 5, and the transfer robot 6 is stopped and the line is also stopped at the defined loading number of the stocker 5.
(5) The stocker 5 fully loaded with the workpieces 4 is carried out to a fully-loaded stocker conveyor 9, and an empty stocker 5 is carried into the palletizing stage 8 from an empty stocker conveyor 10.
(6) After that, the press working line is restarted.
(7) Then, Items (1) to (6) are repeated.

Further, in JP 2003 - 205331 A, there is described a workpiece loading apparatus in which the workpiece subjected to press working is received by a robot and is loaded to one of pallets arranged on both sides of a press working line.

Also for the robot in such a workpiece loading apparatus, an articulated robot similar to the transfer robot 6 described above is used.

In the related-art apparatus as described above, the following problems are anticipated.

That is, in the related-art apparatus illustrated in Fig. 6A and Fig. 6B, at the time of switching from the fully-loaded stocker to the empty stocker, a switching time period becomes longer than a production cycle time of the pressing machine, and hence it is required to stop the line, resulting in a problem in that the productivity is reduced.

Meanwhile, the apparatus of JP 2003 - 205331 A includes the stockers provided on both sides of the press working line, and includes a plurality of articulated robots. With this configuration, the switching time period required at the time of switching from the fully-loaded stocker to the empty stocker is prevented from becoming longer than the production cycle time of the pressing machine so that the line is prevented from being stopped, resulting in that the productivity is improved.

However, as in the related-art apparatus illustrated in Fig. 6A and Fig. 6B and the apparatus of JP 2003 - 205331 A, in a configuration in which the articulated robot is used to load the workpieces to the palette in order in a stacked manner, there is a fear in that the apparatus cannot adapt to an increase in speed of the press working line.

That is, in the case of the articulated robot, the degree of freedom of each joint is large, and further the workpiece is transported while the position of each joint is accurately controlled. Accordingly, when the workpieces are to be stacked to the stocker in order at high speed, an inertia force or the like is also increased along with the acceleration and deceleration, and vibration of the robot arm, in turn, the workpiece is increased at the time of the loading operation. Thus, there has been a limit to the increase in speed of the operation of loading the workpieces to the stocker in order. When the device rigidity of the articulated robot is to be increased in order to suppress vibration, the weight is increased, and hence there is a fear of causing an increase in size of the apparatus, an increase in cost, and an increase in sophistication of the system, such as an increase in capacity of a drive source configured to drive the joint, in turn, the arm (for example, further causing the need for separately providing a brake system or the like in order to keep the position of the joint or the arm).

In view of the foregoing, according to at least one aspect of the present invention, there is provided a workpiece loading apparatus, including a pick-up stage from which a workpiece is to be picked up, an A-side palletizing stage and a B-side palletizing stage which are provided on both sides across the pick-up stage, an A-side lifting device configured to raise and lower an A-side stocker supplied to the A-side palletizing stage, a B-side lifting device configured to raise and lower a B-side stocker supplied to the B-side palletizing stage and a workpiece transfer device including a workpiece holding unit configured to hold and release the workpiece. The workpiece transfer device further includes a horizontal moving mechanism and a raising and lowering mechanism as separate mechanisms. The horizontal moving mechanism is configured to horizontally move the workpiece holding unit among the pick-up stage, the A-side palletizing stage, and the B-side palletizing stage. The raising and lowering mechanism is configured to raise and lower the workpiece holding unit. The workpiece transfer device is configured to transfer the workpiece picked up from the pick-up stage via the workpiece holding unit to one of the A-side stocker or the B-side stocker. The workpiece transfer device is configured to transfer the workpiece picked up from the pick-up stage to any one of the A-side stocker or the B-side stocker until the number of transferred workpieces reaches a predetermined setting number. A corresponding one of the A-side lifting device or the B-side lifting device corresponding to the any one of the A-side stocker or the B-side stocker is configured to raise and lower a height of the corresponding one of the A-side stocker or the B-side stocker so as to be aligned with a workpiece horizontal movement height of the workpiece transfer device, in accordance with a workpiece stacking height. The workpiece transfer device is configured to switch, when the number of workpieces transferred to the corresponding one of the A-side stocker or the B-side stocker has reached the predetermined setting number, an operation to transfer of the workpiece picked up from the pick-up stage to another one of the A-side stocker or the B-side stocker.

In at least one aspect of the present invention, while the workpiece transfer device is loading the workpiece picked up from the pick-up stage to the another one of the A-side stocker or the B-side stocker, the corresponding one of the A-side stocker or the B-side stocker in which the number of transferred workpieces has reached the predetermined setting number may be carried out from a corresponding one of the A-side palletizing stage or the B-side palletizing stage, and one of a new A-side stocker or a new B-side stocker may be carried into the corresponding one of the A-side palletizing stage or the B-side palletizing stage.

In at least one aspect of the present invention, the workpiece transfer device may be configured to be capable of rotating the workpiece held by the workpiece holding unit, within a substantially horizontal plane, or to be capable of tilting the workpiece held by the workpiece holding unit with respect to the substantially horizontal plane.

In at least one aspect of the present invention, at least one of the A-side stocker or the B-side stocker may have workpiece accommodating and supporting grooves formed in a plurality of stages along a vertical direction, the workpiece accommodating and supporting grooves being provided for each workpiece to accommodate and support an end portion of the workpiece.

In at least one aspect of the present invention, the horizontal moving mechanism of the workpiece transfer device may be configured to perform horizontal movement of the workpiece holding unit extended to an outer side of one of the A-side palletizing stage or the B-side palletizing stage. The workpiece loading apparatus may further include a tool replacement stage for use in replacement of the workpiece holding unit, the tool replacement stage being provided on an extension of the horizontal movement.

A more complete appreciation of the invention and many of the attendant advantages thereof will be readily obtained as the same becomes better understood by reference to the following detailed description when considered in connection with the accompanying figures, wherein
- Fig. 1A: is a plan view for illustrating a configuration example of a workpiece loading apparatus (palletizing apparatus) according to one embodiment of the present invention;
- Fig. 1B: is a front view (I-arrow view of Fig. 1A) for illustrating a transfer device part extracted from Fig. 1A;
- Fig. 1C: is a left side view of Fig. 1B;
- Fig. 2A: is a plan view for illustrating an example of a workpiece accommodating state of a stocker (palette) in the same embodiment;
- Fig. 2B: is a view for schematically illustrating a cross section taken along the line D-D of Fig. 2A;
- Fig. 3: is an explanatory view for illustrating an overlapping part (45C) between a workpiece (4) and a position regulating element (45B) provided in a workpiece accommodating and supporting groove (45) of a support column (44e (44f)) of a stocker (palette) in the same embodiment (a view as viewed from a direction of an arrow E of Fig. 2A);

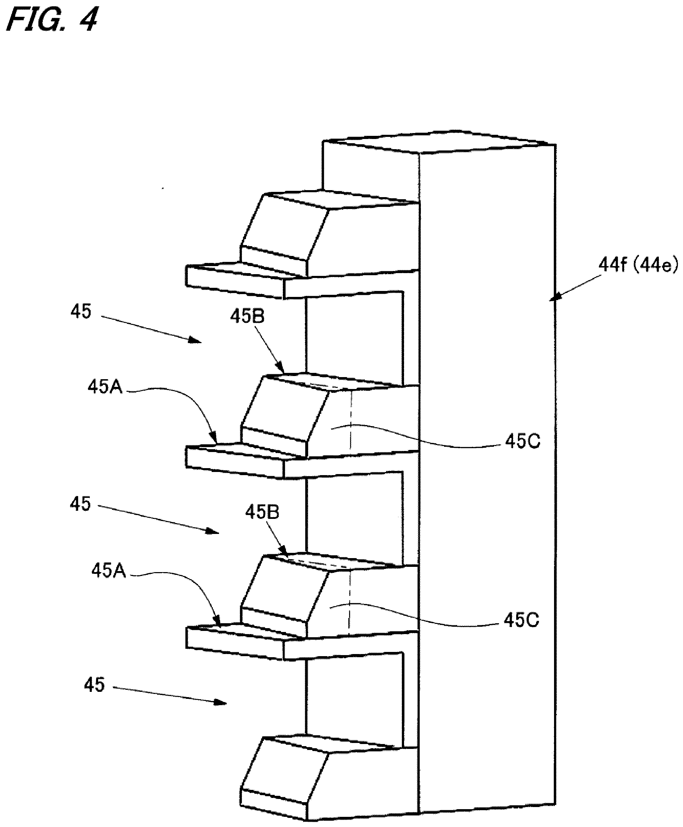

- Fig. 4: is a perspective view for illustrating the support column (44e (44f)) of the stocker (palette) in the same embodiment;
- Figs. 5A and 5B: are explanatory flow charts for illustrating an example of a workpiece loading (palletizing) operation to be performed by the workpiece loading apparatus (palletizing apparatus) according to the same embodiment;
- Fig. 6A: is a plan view for illustrating an example of a related-art workpiece loading apparatus (palletizing apparatus) using an articulated robot; and
- Fig. 6B: is a front view for illustrating a part of a transfer robot and a stocker (palette) extracted from Fig. 6A.

Now, a workpiece loading apparatus (palletizing apparatus) according to an embodiment of the present invention is described with reference to the accompanying drawings. The present invention is not limited to the embodiment described below. Elements similar to those of the above-mentioned related-art apparatus are denoted by the same reference symbols.

Further, in this embodiment, examples of the workpiece include a plate-shaped material serving as a raw material, and a processed product and a shaped product obtained by processing the plate-shaped material. Further, the workpiece may include both of a product in the middle of processing and a finished product.

The present invention has been made in view of the above-mentioned actual circumstance, and has an object to provide a workpiece loading apparatus having a configuration that enables performing highly-accurate workpiece transportation relatively easily and at low cost and with small vibration at the time of workpiece loading, thereby being capable of contributing to achievement of high-speed transportation of the workpiece, in turn, improvement in productivity.

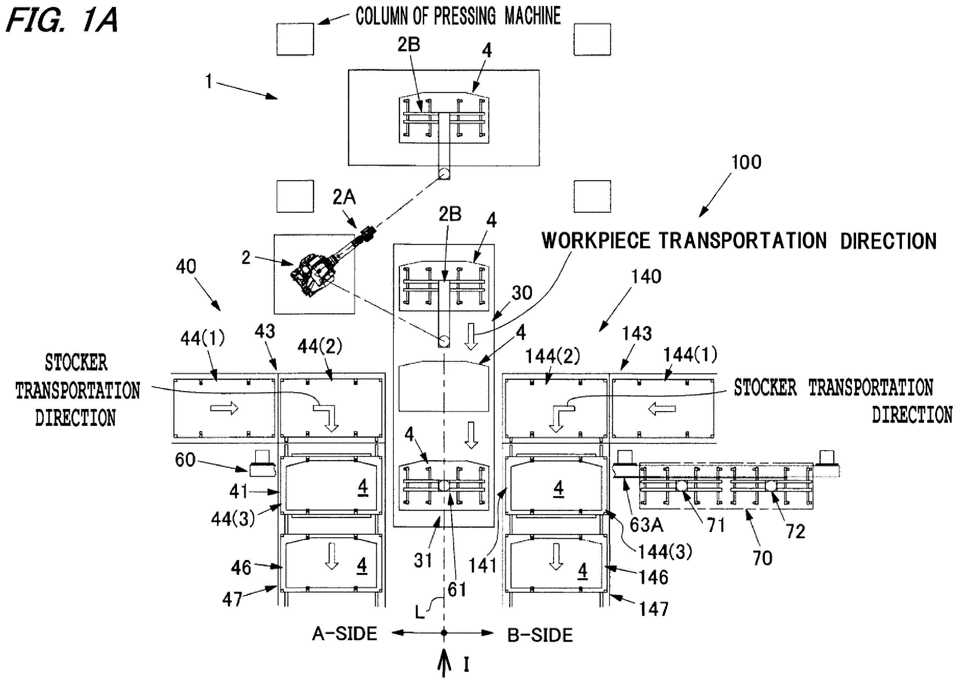

A workpiece loading apparatus (palletizing apparatus) 100 according to an embodiment of the present invention illustrated in Fig. 1A to Fig. 1C performs a loading operation (palletizing operation) as described below. The workpiece loading apparatus (palletizing apparatus) 100 is configured to include a transportation conveyor 30, each stocker supplying and carrying-out device (40 or 140), each stocker (44 or 144), a transfer device 60, and the like which are to be described later.

Next, Step 1 will be described.

In Step 1, a workpiece 4 processed by a pressing machine 1 is held by a workpiece holding unit 2B supported at a distal end of an arm 2A of a carrying-out robot 2 that is an articulated robot, to be transferred to the transportation conveyor 30. The workpiece holding unit 2B is configured to be capable of holding and releasing the workpiece 4 through magnetic attraction, suction, or the like.

Next, Step 2 will be described.

Subsequently, in Step 2, the transportation conveyor 30 transports the workpiece 4 on the transportation conveyor 30 to a pick-up stage 31. A belt conveyor, a roller conveyor, or the like may be used as the transportation conveyor 30.

Next, Step 3 will be described.

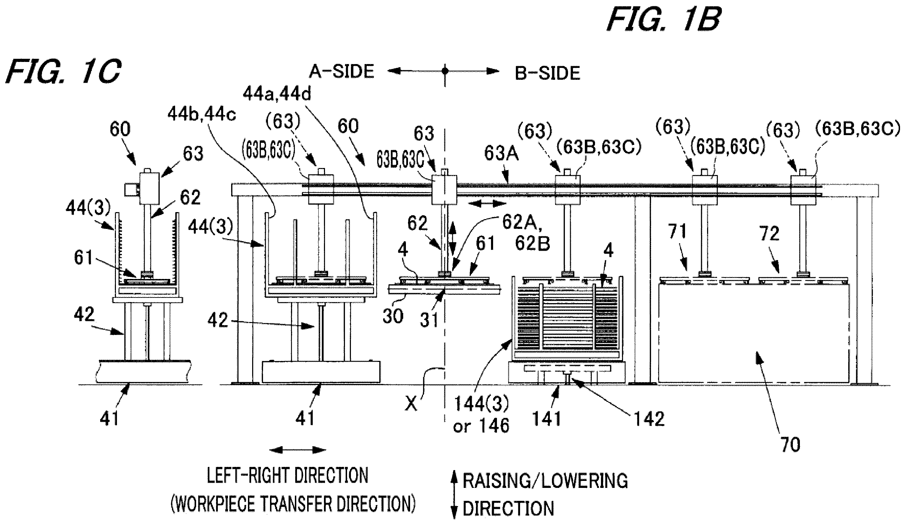

In Step 3, in the A-side stocker supplying and carrying-out device 40 of Fig. 1A, onto an A-side lifting device 42 (see Fig. 1B) arranged at an A-side palletizing stage 41, an empty A-side stocker 44(2) is supplied from an A-side empty stocker conveyor 43 to be set as an A-side stocker 44(3), and the A-side lifting device 42 raises the set empty A-side stocker 44(3) up to an initial position and stands by. The stocker may also be referred to as "palette".

In this case, the A-side empty stocker conveyor 43 is configured to include a belt conveyor and the like, and transports an empty A-side stocker 44(1) placed on a transportation surface of the belt conveyor toward the right side of Fig. 1A, and the empty A-side stocker 44(1) reaches the position of the A-side stocker 44(2) at the right end in Fig. 1A. Under this state, the empty A-side stocker 44(2) is pushed out by an air cylinder (not shown) or the like toward the A-side palletizing stage 41 (downward in Fig. 1A) to be moved on a roller conveyor or the like and supplied (transported) onto the A-side palletizing stage 41, in turn, the A-side lifting device 42. In Fig. 1, the stocker supplied to the A-side palletizing stage 41 is illustrated as the A-side stocker 44(3).

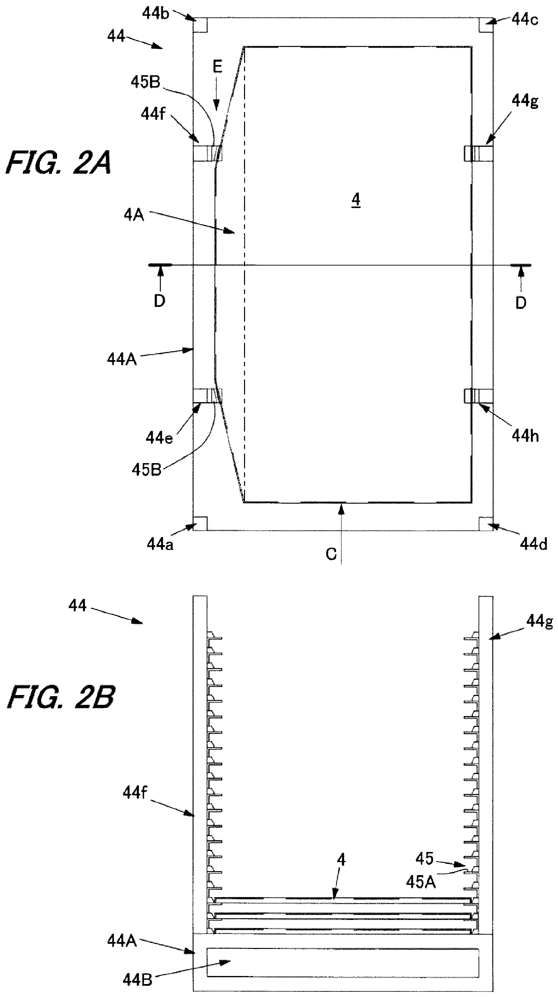

The A-side stockers 44(1) to 44(3) respectively have similar configurations, and, as illustrated in Fig. 2A and Fig. 2B, are each configured to include a base 44A, four columns 44a to 44d, and four support columns 44e to 44h. The base 44A has an outer shape formed into a substantially cuboid shape and includes a space 44B to which a claw of a forklift or the like is insertable. The four columns 44a to 44d are provided upright at four corners of the base 44A. The four support columns 44e to 44h support the workpiece. The four columns 44a to 44d may function as columns that allow another stocker to be stacked on those columns 44a to 44d.

Further, each of the support columns 44e to 44h has workpiece accommodating and supporting grooves 45 which are formed along a short-axis direction of each of the support columns 44e to 44h. The workpiece accommodating and supporting grooves 45 are each provided for each workpiece 4 to accommodate and support an end portion of the workpiece 4. The workpiece accommodating and supporting grooves 45 are formed in a plurality of stages along a longitudinal direction (vertical direction, raising/lowering direction) of each of the support columns 44e to 44h. The workpiece accommodating and supporting grooves 45 of the support columns 44e to 44h cooperate with each other to support the workpiece 4.

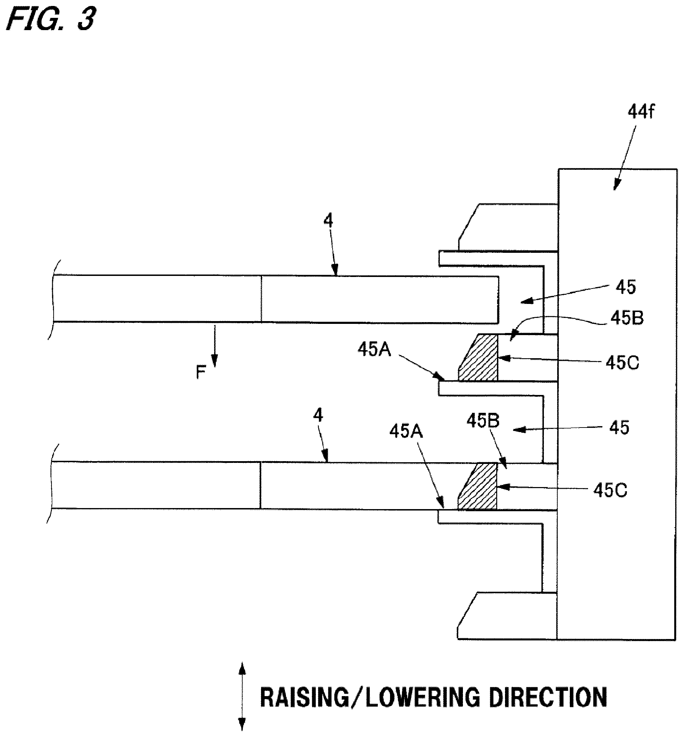

In this embodiment, as illustrated in Fig. 2A, the outer shape of the workpiece 4 is a hexagonal shape having a protruding portion 4A on the left side of Fig. 2A. Accordingly, when the workpiece 4 is to be transferred (loaded) from a direction of an arrow C (workpiece transfer direction) (direction orthogonal to the plane of Fig. 2B) in parallel at a height close to a support surface (upward surface) 45A of the workpiece accommodating and supporting groove 45, as illustrated in Fig. 3, a position regulating element 45B and the workpiece 4 interfere with each other in an overlapping part 45C. Thus, in this embodiment, after the workpiece 4 passes the overlapping part 45C and the workpiece 4 is transferred to reach a workpiece transfer direction position (position of Fig. 2A) at which the position regulating element 45B and the workpiece 4 do not interfere with each other, the workpiece 4 is lowered (or dropped) in the direction of an arrow F of Fig. 3 to be placed on the support surface 45A of the workpiece accommodating and supporting groove 45.

However, when there is no protruding portion 4A as described above, for example, when the long sides of the workpiece 4 are substantially parallel to each other or when no position regulating element 45B is required, the workpiece 4 may be transferred at a height position closer to the support surface 45A of the workpiece accommodating and supporting groove 45 than the case of Fig. 3.

Next, Step 4 will be described.

Subsequently, in Step 4, the transfer device (loading device) 60 picks up the workpiece 4 from the pick-up stage 31 via a workpiece holding unit 61 to horizontally transport the workpiece 4 toward the A-side stocker 44(3) and to transfer (load) the workpiece 4 to the workpiece accommodating and supporting grooves 45 in the lowermost stage of the A-side stocker 44(3).

In this case, the transfer device (loading device) 60 corresponds to an example of a workpiece transfer device of the present invention.

The workpiece holding unit 61 is configured to be capable of holding and releasing the workpiece 4 through magnetic attraction, suction, or the like.

Further, the transfer device 60 includes a moving unit 63 including a horizontal moving mechanism and a raising and lowering mechanism. The horizontal moving mechanism is capable of horizontally moving the workpiece holding unit 61 in a right-left direction in Fig. 1A and Fig. 1B. The raising and lowering mechanism is capable of raising and lowering the workpiece holding unit 61 via a support portion 62 (capable of moving the workpiece holding unit 61 in an up-down direction in Fig. 1B). In Fig. 1B, for convenience of description, five moving units 63, in turn, five transfer devices 60 are illustrated including those with a parenthetic reference symbol (63) or (60), but, in an actual case, one unit or device corresponding to the reference symbol 63 or 60 without parentheses is provided.

The horizontal moving mechanism of the moving unit 63 is configured to include: a guide rail 63A (partially illustrated in Fig. 1A) extending in the left-right direction in Fig. 1A and Fig. 1B; a guide block 63B (illustration is omitted in Fig. 1A) to be guided to be movable along the guide rail 63A; and a drive unit 63C (illustration is omitted in Fig. 1A) configured to move the guide block 63B, in turn, the moving unit 63 along the guide rail 63A. The drive unit 63C may adopt, for example, a rotary-to-linear motion conversion mechanism that is formed of an electric motor and a rack and pinion mechanism (not shown), a linear motion mechanism such as a linear motor, or the like.

The raising and lowering mechanism of the moving unit 63 is configured to be capable of raising and lowering the support portion 62 relative to a main body of the moving unit 63 via a rotary-to-linear motion conversion mechanism that is formed of an electric motor and a rack and pinion mechanism (not shown), a linear motion mechanism such as a linear motor, or the like.

With such a configuration, at the time of picking up the workpiece 4, the transfer device 60 can lower the workpiece holding unit 61 to hold the workpiece 4 at the pick-up stage 31, and then can raise the workpiece 4 up to a workpiece transportation height.

In this embodiment, the horizontal moving mechanism of the moving unit 63 and the raising and lowering mechanism of the moving unit 63 are mechanisms independent of each other (separate mechanisms), and have configurations which can be controlled in movement (controlled in drive) independently.

Then, after the workpiece 4 is raised, the transfer device 60 causes the horizontal moving mechanism to move the moving unit 63 along the guide rail (linear-movement guiding rail) 63A to transfer (transport) the workpiece 4 being held to a predetermined position (position of Fig. 2A) within the workpiece accommodating and supporting grooves 45 in the lowermost stage of the A-side stocker 44(3), and then lowers the workpiece holding unit 61 and releases the workpiece 4 to transfer (load) the workpiece 4 to the workpiece accommodating and supporting grooves 45 in the lowermost stage of the A-side stocker 44(3). However, when scratches and the like do not become a problem, instead of lowering the workpiece holding unit 61, the workpiece 4 can be released and dropped at the position of the workpiece transportation height.

After that, the raising and lowering mechanism raises the workpiece holding unit 61 to a predetermined height to achieve a state without interference with others, and the horizontal moving mechanism moves the moving unit 63 to an initial position (pick-up stage 31) along the guide rail 63A to stand by for the next workpiece transfer (loading).

Next, Step 5 will be described.

In Step 5, the A-side lifting device 42 is lowered by one stage of the workpiece accommodating and supporting grooves 45 of the A-side stocker 44(3), and stands by until the next workpiece 4 is transferred to the empty workpiece accommodating and supporting grooves 45. The A-side lifting device 42 may be configured to be capable of being raised and lowered through use of a linear actuator such as an air cylinder. As another example, a rotary-to-linear motion conversion mechanism that is formed of an electric motor and a rack and pinion mechanism (not shown), a linear motion mechanism such as a linear motor, or the like may also be used.

Next, Step 6 will be described.

In Step 6, after Step 4 and Step 5 described above are repeated so that the workpieces 4 are transferred (loaded) to all stages of the workpiece accommodating and supporting grooves 45 of the A-side stocker 44(3), the transfer device 60 starts transfer (loading) of the workpiece 4 from the pick-up stage 31 to an empty B-side stocker 144(3) arranged in plane symmetry with the A-side stocker 44(3).

B-side stockers 144(1) to 144(3) are stockers having the same configuration obtained by arranging the A-side stockers 44(1) to 44(3) in plane symmetry with respect to a plane X (see Fig. 1B) perpendicular to a center line L (see Fig. 1A) of the workpiece transportation line, and hence description thereof is omitted. Further, a B-side stocker supplying and carrying-out device 140, a B-side palletizing stage 141, a B-side lifting device 142, and a B-side empty stocker conveyor 143 have configurations similar to those of the A-side stocker supplying and carrying-out device 40, the A-side palletizing stage 41, the A-side lifting device 42, and the A-side empty stocker conveyor 43, respectively, and hence description thereof is omitted.

Next, Step 7 will be described.

In Step 7, while the workpieces 4 are being transferred (loaded) to a plurality of stages of workpiece accommodating and supporting grooves (similar to the workpiece accommodating and supporting grooves 45) of the B-side stocker 144(3), on the A-side, the A-side stocker 44(3) fully loaded with the workpieces 4 is pushed out from the A-side palletizing stage 41 by an air cylinder (not shown) or the like, and is carried out to an A-side fully-loaded stocker conveyor 47 as an A-side fully-loaded stocker 46. Further, a new empty A-side stocker 44(2) is carried in from the A-side empty stocker conveyor 43 and stands by at an initial position (position of the A-side stocker 44(3) of Fig. 1A).

In this case, the term "fully loaded" means "a state in which a predetermined setting number (or a preset predetermined number or a preset plurality) of workpieces have been transferred (accommodated) into the A-side stocker 44 (or the B-side stocker 144)," and does not always mean a state in which the maximum number of workpieces that may be physically accommodated have been transferred into the A-side stocker 44 (or the B-side stocker 144). For example, even under a state in which the workpieces are not accommodated in all of the stages of the plurality of stages of workpiece accommodating and supporting grooves 45, when the number of accommodated workpieces reaches the predetermined setting number, this state is referred to as "fully loaded."

Next, Step 8 will be described.

After that, Step 1 to Step 7 are repeated alternately between the A-side stocker 44 and the B-side stocker 144.

In this manner, in this embodiment, at the time of switching from the fully-loaded stocker to the empty stocker, it is not required to stop the operation of the press working line, and the productivity can be improved.

Further, according to this embodiment, instead of adopting a configuration in which an articulated robot is used to load workpieces on a stocker (palette) in order, an apparatus configuration using high-rigidity mechanisms (horizontal moving mechanism and raising and lowering mechanism which are independent of each other) is adopted, and hence the apparatus can adapt to an increase in speed of loading (increase in speed of palletizing) the workpiece to the stocker, in turn, an increase in speed of the press working line.

Further, according to this embodiment, the workpiece accommodating and supporting grooves 45 are adopted, and the workpieces are not directly stacked on one another in the stocker. As a result, occurrence of damage such as scratches due to contact between the workpieces and occurrence of fitting between the workpieces, inclination of the workpiece, or the like can be prevented.

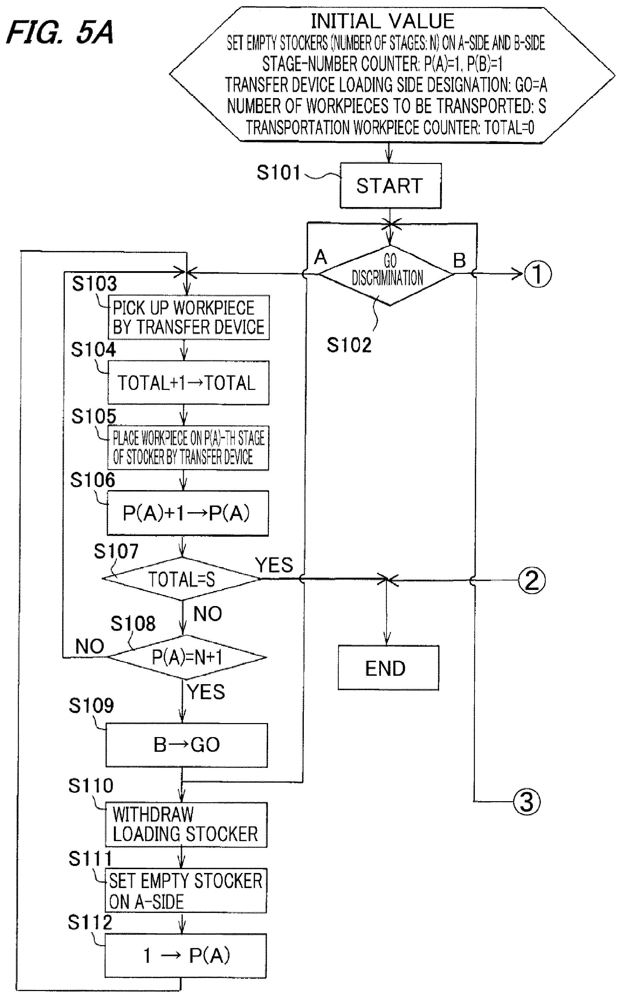

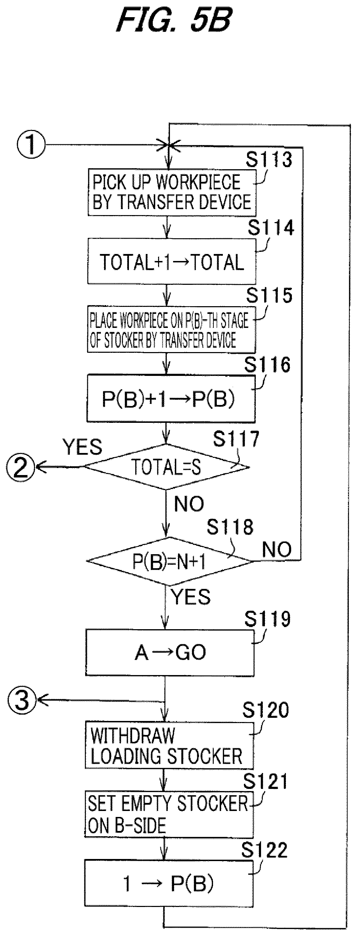

Now, with reference to the flow charts of Figs. 5A and 5B, the workpiece loading (palletizing) operation to be performed by the workpiece loading apparatus (palletizing apparatus) 100 according to this embodiment is described. First, each initial value is set.

In Step (written as "S" in Figs. 5A and 5B) 101, this flow is started.

In Step 102, it is determined whether to perform the workpiece transfer (loading) operation on the A-side or the B-side (discrimination of transfer device loading side designation GO is performed). In this case, setting is made to perform transfer to the A-side stocker first, and hence the process proceeds to Step 103 (initial value: GO=A).

In Step 103, the transfer device 60 picks up the workpiece 4 from the pick-up stage 31.

In Step 104, a transportation workpiece counter TOTAL is incremented by 1 and the value of TOTAL is updated (TOTAL+1--->TOTAL). The initial value of the transportation workpiece counter TOTAL is 0 (initial value: TOTAL=0).

In Step 105, the transfer device 60 transfers (loads) the workpiece 4 to the workpiece accommodating and supporting grooves 45 in the P(A)-th stage of the A-side stocker 44(3).

In Step 106, a stage-number counter P(A) is incremented by 1 and the value of P(A) is updated (P(A)+1→P(A)). The initial value of the stage-number counter P(A) is 1 (initial value: P(A)=1).

In Step 107, it is determined whether or not the transportation workpiece counter TOTAL has become a predetermined value S. When the result is NO, the process proceeds to Step 108, and, when the result is YES, it is determined that transportation of a setting number (predetermined number) of workpieces has been ended, and this flow is ended.

In Step 108, it is determined whether or not the stage-number counter P(A) has become "N+1" (N is the number of stages of the workpiece accommodating and supporting grooves of the stocker). When the result is YES, it is determined that the A-side stocker 44(3) has become a full-load state (state in which a predetermined setting number of workpieces has been transferred (accommodated)), and the process proceeds to Step 109. When the result is NO, the process returns to Step 103, and Step 103 to Step 108 are repeated until the result becomes YES.

In Step 109, this step corresponds to a case in which the A-side stocker 44(3) has become the full-load state, and hence, in order to shift to execution of transfer (loading) of the workpiece to the B-side stocker, B is set for the transfer device loading side designation GO, and the process returns to Step 102 and proceeds to Step 110.

In Step 110, the fully-loaded stocker is withdrawn. That is, the A-side stocker 44(3) that has become the full-load state is carried out to the A-side fully-loaded stocker conveyor 47 as the A-side fully-loaded stocker 46.

In Step 111, an empty stocker is set on the A-side. That is, a new empty A-side stocker 44(2) is carried into the A-side palletizing stage 41 from the A-side empty stocker conveyor 43 to be set at an initial position (position of the A-side stocker 44(3) of Fig. 1A).

In Step 112, the stage-number counter P(A) is reset to the initial value of 1, and the process returns to Step 103.

Here, when the process proceeds to Step 102 from Step 109 described above, GO=B is set, and hence, in order to perform transfer of the workpiece to the B-side stocker, the process proceeds to Step 113 from Step 102.

In Step 113, the transfer device 60 picks up the workpiece 4 from the pick-up stage 31.

In Step 114, the transportation workpiece counter TOTAL is incremented by 1 and the value of TOTAL is updated (TOTAL+1→TOTAL). The initial value of the transportation workpiece counter TOTAL is 0 (initial value: TOTAL=0).

In Step 115, the transfer device 60 transfers (loads) the workpiece 4 to the workpiece accommodating and supporting grooves 45 in the P(B)-th stage of the B-side stocker 144(3).

In Step 116, a stage-number counter P(B) is incremented by 1 and the value of P(B) is updated (P(B)+1→P(B)). The initial value of the stage-number counter P(B) is 1 (initial value: P(B)=1).

In Step 117, it is determined whether or not the transportation workpiece counter TOTAL has become the predetermined value S. When the result is NO, the process proceeds to Step 118, and, when the result is YES, it is determined that transportation of the setting number (predetermined number) of workpieces has been ended, and this flow is ended.

In Step 118, it is determined whether or not the stage-number counter P(B) has become "N+1" (N is the number of stages of the workpiece accommodating and supporting grooves of the stocker). When the result is YES, it is determined that the B-side stocker 144(3) has become the full-load state, and the process proceeds to Step 119. When the result is NO, the process returns to Step 113, and Step 113 to Step 118 are repeated until the result becomes YES.

In Step 119, this step corresponds to a case in which the B-side stocker 144(3) has become the full-load state, and hence, in order to shift to execution of transfer (loading) of the workpiece to the A-side stocker, A is set for the transfer device loading side designation GO, and the process returns to Step 102 and proceeds to Step 120.

In Step 120, the fully-loaded stocker is withdrawn. That is, the B-side stocker 144(3) that has become the full-load state is carried out to a B-side fully-loaded stocker conveyor 147 as a B-side fully-loaded stocker 146.

In Step 121, an empty stocker is set on the B-side. That is, a new empty B-side stocker 144(2) is carried into the B-side palletizing stage 141 from the B-side empty stocker conveyor 143 to be set at the initial position (position of the B-side stocker 144(3) of Fig. 1A).

In Step 122, the stage-number counter P(B) is reset to the initial value of 1, and the process returns to Step 113.

With such a control flow chart being executed, in this embodiment, first, the workpiece is transferred (loaded) from the pick-up stage to the A-side empty stocker (palette). When the A-side stocker becomes full with the workpieces, the operation is switched to transfer (loading) of the workpiece to the B-side empty stocker arranged on a side opposite to the A-side stocker across the workpiece pick-up stage. Thus, the operation of the pressing line can be continued without being stopped. Then, while the workpiece is being transferred to the B-side stocker (before the B-side stocker becomes full with the workpieces), the stocker that has become full at the A-side palletizing stage is carried out and replaced with an empty stocker. Thus, when the B-side stocker becomes full, the operation is switched again to transfer (loading) of the workpiece to the A-side empty stocker.

That is, in this embodiment, there is obtained a configuration in which the following operations are repeated: the workpiece is transferred (loaded) to one of the two stockers on the A-side and the B-side, and, when the stocker is brought to a workpiece full-load state, the operation is switched to transfer (loading) of the workpiece to another one of the stockers. Thus, it is not required to stop the operation of the press working line, and the productivity can be improved.

Further, in this embodiment, instead of adopting a configuration in which the articulated robot is used to load the workpieces to the stocker (palette) in order, the workpiece is transferred by relatively-low-cost and high-rigidity mechanisms in which movement in the horizontal direction and movement in the raising/lowering direction are performed independently, and hence a high-rigidity workpiece transfer device (60) with small vibration at the time of workpiece loading can be achieved. Accordingly, the apparatus can adapt to the increase in speed of loading (increase in speed of palettizing) the workpiece to the stocker, in turn, the increase in speed of the press working line.

Further, according to this embodiment, the A-side lifting device 42 and the B-side lifting device 142 are adopted, and, as a configuration of raising and lowering the stocker in accordance with the change in stacking amount (stacking height) of the workpieces 4 in the stocker, a configuration capable of maintaining the workpiece transportation height side constant is adopted. Thus, the movement of the transfer device (60) which is a movable unit and to which the inertia force acts, in the raising/lowering direction while the workpiece is being transported at high speed can be kept to a minimum. As a result, occurrence of excessive vibration or the like can be prevented, and the apparatus can contribute to an increase in speed of loading (increase in speed of palletizing) the workpiece to the stocker, in turn, an increase in speed of the press working line.

As described above, according to this embodiment, a configuration capable of performing highly-accurate workpiece transportation with small vibration at the time of workpiece loading is obtained relatively easily and at low cost, and thus a workpiece loading apparatus (transfer apparatus) capable of contributing to achievement of high-speed transportation of the workpiece, in turn, improvement in productivity can be provided.

Further, according to this embodiment, the workpiece accommodating and supporting grooves (45) which accommodate and support the workpieces one by one individually without bringing the workpieces into contact with each other are provided in the stocker, and hence, without directly stacking the workpieces on one another in the stocker, occurrence of damage such as scratches due to the contact between the workpieces and occurrence of fitting between the workpieces, inclination of the workpiece, or the like can be prevented. However, in a case of a workpiece in which scratches and the like do not become a problem, instead of providing the workpiece accommodating and supporting grooves 45, a configuration in which the next workpiece is stacked on the workpiece can also be adopted.

Further, according to this embodiment, the workpiece accommodating and supporting grooves (45) which accommodate and support the workpieces one by one individually are provided in the stocker, and hence, at the time of taking out the workpiece from the stocker in the next step, occurrence of troubles such as double-sheets attraction can be prevented.

Further, in this embodiment, the position regulating element 45B configured to restrict the position of the workpiece 4 is provided in the workpiece accommodating and supporting groove 45, and hence the posture of the workpiece in the stocker is stabilized. Accordingly, for example, it is not required to correct the posture of the workpiece before the workpiece is supplied to the next step or the like, and hence the apparatus can contribute to improvement in productivity, improvement in workpiece transportability, and the like.

Further, in this embodiment, in Fig. 1A, the palletizing stages (41 and 141) on the A-side and the B-side are arranged symmetrical with respect to the pick-up stage 31, and hence the transfer can be performed at the same cycle even when the transfer direction is switched between the A-side and the B-side. Accordingly, it is not required to stop the press working line at the time of switching the stocker to which the workpiece is transferred. Thus, the productivity can be maintained high.

Further, in this embodiment, the workpiece can be transferred to the stocker in the horizontal direction at a height at which the workpiece is picked up from the pick-up stage 31. Accordingly, the raising and lowering operation of the transfer device can be suppressed to the minimum required stroke, and the apparatus can contribute to an increase in cycle speed.

Further, in this embodiment, for example, a revolving unit 62A configured to rotate a workpiece held by the workpiece holding unit 61 within a workpiece plane may be provided so that the workpiece can be revolved, or a tilting unit 62B configured to tilt the workpiece holding unit 61 with respect to a longitudinal center axis of the support portion 62 (substantially vertical axis) may be provided so that the workpiece held by the workpiece holding unit 61 can be tilted. With those configurations, workpieces having various shapes can be easily transferred to the stocker, and the possibility of being more adaptable to the stocker shape required in the next step can be widened.

Further, in this embodiment, a tool replacement stage 70 is provided on an extension of a horizontal traveling axis (guide rail 63A) of the transfer device 60. With this configuration, a tool may be rapidly and easily replaced (for example, the workpiece holding unit 61 may be replaced with a workpiece holding unit 71 or 72 or the like) in accordance with the specification of the workpiece (size, shape, or the like) moving down the press working line, and hence the apparatus can contribute to automation of the press working line or the like, and can contribute to provision of a user-friendly system.

In this embodiment, description has been given of, in Fig. 1A, the A-side as a mode in which, at the time of transporting the empty A-side stocker 44 from the A-side empty stocker conveyor 43 to the A-side palletizing stage 41, in Fig. 1A, the empty A-side stocker 44 is transported from the left to the right and thereafter moved downward, and the B-side arranged on a side opposite to the A-side across the pick-up stage 31 and in plane symmetry with respect to the plane X as a mode in which, at the time of transporting the empty B-side stocker 144 from the B-side empty stocker conveyor 143 to the B-side palletizing stage 141, in Fig. 1A, the empty B-side stocker 144 is transported from the right to the left and thereafter moved downward, but the present invention is not limited thereto. For example, the A-side may be left unchanged, and the B-side may employ a configuration in which the B-side stocker 144 is transported from the right to the left and thereafter moved upward. Further, the B-side may be left unchanged, and the A-side may employ a configuration in which the A-side stocker 44 is transported from the right to the left and thereafter moved upward.

That is, how to supply and carry out the stocker (palette) and the path of transportation (supply) are not particularly limited as long as the following configuration is adopted. That is, the A-side palletizing stage 41 and the B-side palletizing stage 141 are provided on both sides across the pick-up stage 31, and those three stages are arranged side by side. In addition, the empty stocker (palette) may be sequentially supplied to the A-side palletizing stage 41 and the B-side palletizing stage 141, and, when any one of the stockers (palettes) becomes full, the stocker (palette) is carried out so that a new empty stocker (palette) may be supplied.

Further, in this embodiment, a plurality of the workpiece transfer devices 60 may be located in the workpiece transfer direction. Hereat, each of the guide rails 63A of the workpiece transfer devices 60 is located in parallel to each other and is orthogonal to the workpiece transfer direction. The A-side palletizing stage 41 corresponds to each of the workpiece transfer devices 60. Likewise, the B-side palletizing stage 141 also corresponds to each of the workpiece transfer devices 60.

In this case, each of a plurality of workpieces 4 are transferred onto the pick-up stage 31 in sequence. When the workpieces 4 are positioned next to each other on the pick-up stage 31, each of the workpiece transfer devices 60 simultaneously picks up each of the workpieces 4. The picked-up workpieces 4 are simultaneously and respectively transferred to a plurality of the A-side stockers 44(3) which are on the A-side palletizing stage 41. Likewise, a plurality of other workpieces 4 are simultaneously and respectively transferred to a plurality of the B-side stockers 144(3) which are on the B-side palletizing stage 141.

As a result, the transfer efficiency of the workpieces 4 may be more improved.

Further, in this embodiment, as an example, description has been given of a configuration in which the A-side and B-side stocker supplying and carrying-out devices 40 and 140 are installed on a floor or the like and each stocker is moved relative to the supplying and carrying-out devices, but the present invention is not limited to the configuration. A configuration using an automated guided vehicle (AGV) which moves by itself while holding each stocker for transportation may also be employed.

Further, in this embodiment, the operation of transferring the workpiece of this apparatus can be performed in a reversed order. In this case, this apparatus may be a depalletizing (unloading) apparatus configured to unload the workpiece from the stocker to put (supply) the workpiece into the pressing machine.

According to at least one embodiment of the present invention, a configuration capable of performing highly-accurate workpiece transportation with small vibration at the time of workpiece loading is obtained relatively easily and at low cost, and thus a workpiece loading apparatus capable of contributing to achievement of high-speed transportation of the workpiece, in turn, improvement in productivity can be provided.

The embodiment according to the present invention described above is merely an example for describing the present invention, and various modifications may be made without departing from the gist of the present invention.

### REFERENCE SIGNS

- 1: pressing machine
- 2: carrying-out robot
- 2A: arm
- 2B: workpiece holding unit
- 4: workpiece
- 4A: protruding portion
- 30: transportation conveyor
- 31: pick-up stage
- 40: A-side stocker supplying and carrying-out device
- 41: A-side palletizing stage
- 42: A-side lifting device
- 43: A-side empty stocker conveyor
- 44: A-side stocker (palette)
- 44A: base
- 44B: space
- 44a to 44d: column
- 44e to 44h: support column
- 45: workpiece accommodating and supporting groove
- 45A: support surface (upward surface)
- 45B: position regulating element
- 45C: overlapping part
- 46: A-side fully-loaded stocker
- 47: A-side fully-loaded stocker conveyor
- 60: transfer device (loading device)/ workpiece transfer device
- 61: workpiece holding unit
- 62: support portion
- 62A: revolving unit
- 62B: tilting unit
- 63: moving unit
- 63A: guide rail
- 63B: guide block
- 63C: drive unit
- 70: tool replacement stage
- 71, 72: workpiece holding unit
- 100: workpiece loading apparatus (palletizing apparatus)
- 140: B-side stocker supplying and carrying-out device
- 141: B-side palletizing stage
- 142: B-side lifting device
- 143: B-side empty stocker conveyor
- 144: B-side stocker
- 146: B-side fully-loaded stocker
- 147: B-side fully-loaded stocker conveyor

- L: center line
- X: plane

## Claims

1. A workpiece loading apparatus (100), comprising:
a pick-up stage (31) from which a workpiece (4) is to be picked up;
an A-side palletizing stage (41) and a B-side palletizing stage (141) which are provided on both sides across the pick-up stage (31);
an A-side lifting device (42) configured to raise and lower an A-side stocker (44) supplied to the A-side palletizing stage (41);
a B-side lifting device (142) configured to raise and lower a B-side stocker (144) supplied to the B-side palletizing stage (141); and
a workpiece transfer device (60) including a workpiece holding unit (61) configured to hold and release the workpiece (4), the workpiece transfer device (60) further including a horizontal moving mechanism and a raising and lowering mechanism as separate mechanisms, the horizontal moving mechanism being configured to horizontally move the workpiece holding unit (61) among the pick-up stage (31), the A-side palletizing stage (41), and the B-side palletizing stage (141), the raising and lowering mechanism being configured to raise and lower the workpiece holding unit (61), the workpiece transfer device (60) being configured to transfer the workpiece (4) picked up from the pick-up stage (31) via the workpiece holding unit (61) to one of the A-side stocker (44) or the B-side stocker (144),
wherein the workpiece transfer device (60) is configured to transfer the workpiece (4) picked up from the pick-up stage (31) to any one of the A-side stocker (44) or the B-side stocker (144) until the number of transferred workpieces (4) reaches a predetermined setting number,
wherein a corresponding one of the A-side lifting device (42) or the B-side lifting device (142) corresponding to the any one of the A-side stocker (44) or the B-side stocker (144) is configured to raise and lower a height of the corresponding one of the A-side stocker (44) or the B-side stocker (144) so as to be aligned with a workpiece horizontal movement height of the workpiece transfer device (60), in accordance with a workpiece stacking height, and
wherein the workpiece transfer device (60) is configured to switch, when the number of workpieces (4) transferred to the corresponding one of the A-side stocker (44) or the B-side stocker (144) has reached the predetermined setting number, an operation to transfer of the workpiece (4) picked up from the pick-up stage (31) to another one of the A-side stocker (44) or the B-side stocker (144).

2. The workpiece loading apparatus (100) according to claim 1,
wherein, while the workpiece transfer device (60) is loading the workpiece (4) picked up from the pick-up stage (31) to the another one of the A-side stocker (44) or the B-side stocker (144), the corresponding one of the A-side stocker (44) or the B-side stocker (144) in which the number of transferred workpieces (4) has reached the predetermined setting number is carried out from a corresponding one of the A-side palletizing stage (41) or the B-side palletizing stage (141), and one of a new A-side stocker (44) or a new B-side stocker (144) is carried into the corresponding one of the A-side palletizing stage (41) or the B-side palletizing stage (141).

3. The workpiece loading apparatus (100) according to claim 1 or 2,
wherein the workpiece transfer device (60) is configured to be capable of rotating the workpiece (4) held by the workpiece holding unit (61), within a substantially horizontal plane, or to be capable of tilting the workpiece (4) held by the workpiece holding unit (61) with respect to the substantially horizontal plane.

4. The workpiece loading apparatus (100) according to any one of claims 1 to 3,
wherein at least one of the A-side stocker (44) or the B-side stocker (144) has workpiece accommodating and supporting grooves (45) formed in a plurality of stages along a vertical direction, the workpiece accommodating and supporting grooves (45) being provided for each workpiece (4) to accommodate and support an end portion of the workpiece (4).

5. The workpiece loading apparatus (100) according to any one of claims 1 to 4,
wherein the horizontal moving mechanism of the workpiece transfer device (60) is configured to perform horizontal movement of the workpiece holding unit (61) extended to an outer side of one of the A-side palletizing stage (41) or the B-side palletizing stage (141), and wherein the workpiece loading apparatus (100) further comprises a tool replacement stage (70) for use in replacement of the workpiece holding unit (61), the tool replacement stage (70) being provided on an extension of the horizontal movement.
